# EUROPEAN PATENT APPLICATION

(11) **EP 2 581 619 A2**
(43) Date of publication of application: **17.04.2013**
(21) Application number: 12188272.4
(22) Date of filing: 12.10.2012
(51) Int. Cl.: F16D 27/112

(54) **Electromagnetic clutch**

(30) Priority: 13.10.2011 JP 2011226015
(71) Applicant: JTEKT CORPORATION, Osaka-shi Osaka 542-8502 (JP)
(72) Inventor: Onizuka, Takaaki, Osaka-shi, Osaka 542-8502 (JP); Saito, Haruhiko, Osaka-shi, Osaka 542-8502 (JP); Kitaguchi, Kingo, Osaka-shi, Osaka 542-8502 (JP)
(74) Representative: TBK

(57) **Abstract**

An electromagnetic clutch (1) includes: a rotary member (2); an output mechanism (3) including an electromagnetic coil (30) and an armature (31) moved toward the electromagnetic coil by electromagnetic force; a cam mechanism (4) operated by rotation of the rotary member in the electromagnetic coil energized state; and a coil housing (5) having a coil accommodating portion (50) open toward the armature and accommodating the electromagnetic coil. The coil housing and the armature have frictional engagement faces (31b, 31c). The frictional engagement faces of the coil housing and the armature are frictionally-engageable. At least one of the coil housing and the armature has a contact pressure reducing portion for reducing contact pressures of the frictional engagement faces of the coil housing and the armature, based on cam thrust generated through an operation of the cam mechanism when the frictional engagement faces of the coil housing and the armature are frictionally-engaged.

## Description

### BACKGROUND OF THE INVENTION

### 1. Field of the Invention

The invention relates to an electromagnetic clutch that is used to control torque transmission between rotary members or braking of a rotary member.

### 2. Description of Related Art

There is a conventional electromagnetic clutch that includes an output mechanism and a cam mechanism (see, for example, Japanese Patent Application Publication No. 2004-17807 (JP 2004-17807 A)). The output mechanism generates electromagnetic force to output actuating force. The cam mechanism operates along an axis of the output mechanism through driving of an electric motor.

The output mechanism includes an electromagnetic coil and an armature. The electromagnetic coil generates electromagnetic force. The armature is actuated upon energization of the electromagnetic coil. The output mechanism is arranged around an output shaft.

The electromagnetic coil is accommodated in a coil housing, and is fixed to a vehicle body-side member. The coil housing is formed of a first housing element and a second housing element. The first housing element rotates together with the output shaft. The second housing element is open toward the first housing element.

The armature is arranged at such a position as to face the electromagnetic coil via the coil housing. The armature is configured to be frictionally engaged with the coil housing when the output mechanism outputs actuating force. In addition, the armature is configured to be moved away from the coil housing by the spring force of a return spring when the output mechanism stops outputting actuating force.

The cam mechanism includes the above-described armature, and includes a gear, serving as a cam member, and cam followers. The gear is rotated through driving of the electric motor. The cam followers are interposed between the gear and the armature. The cam mechanism is arranged along the axis of the output mechanism.

The gear is rotatably arranged around the output shaft. In addition, the gear is coupled to an input shaft (a motor shaft of the electric motor) via a speed reducing gear row.

The cam followers each are formed of a spherical member. The cam followers are rollably arranged between the gear (cam grooves) and the armature (cam grooves).

With the above configuration, when the electromagnetic coil is energized while the electric motor is driven, the armature is moved toward the electromagnetic coil and frictionally engaged with the coil housing. Accordingly, the cam mechanism operates. Therefore, due to cam action carried out through the operation of the cam mechanism, the armature is frictionally engaged with the coil housing more firmly than before the cam mechanism is actuated. Thus, driving torque of the electric motor is transmitted to the output shaft (differential side) via, for example, the cam mechanism.

On the other hand, when the electromagnetic coil is de-energized while the electric motor is stopped, frictional engagement between the armature and the coil housing is cancelled by the spring force of the return spring, so the cam mechanism does not operate. Therefore, transmission of driving torque from the electric motor to the differential side is interrupted.

In addition, there is a conventional electromagnetic clutch (brake) that includes a fixed portion and a rotary portion (see, for example, Japanese patent Application Publication No. 2000-179583 (JP 2000-179583 A)). The fixed portion has a coil housing that is open toward an armature and that accommodates a coil. The rotary portion has a hub that is rotatable with respect to the fixed portion.

With the electromagnetic clutch described in JP 2004-17807 A, during an operation of the cam mechanism, the armature receives cam thrust from the cam followers at its radially inner portion (the bottoms of the cam grooves) not at its radially outer portion, and is frictionally engaged with the first coil housing. Therefore, if the coil housing described in JP 2004-17807 A is open toward the armature as in the case of the coil housing described in JP 2000-179583 A, the armature elastically deforms in such a manner that the radially outer portion moves away from the coil housing with the radially inner portion in contact with the opening periphery (edge) of the coil housing. Due to stress concentration on the edge of the coil housing, a maximum contact pressure against the coil housing is increased.

### SUMMARY OF THE INVENTION

It is an object of the invention to provide an electromagnetic clutch that makes it possible to reduce a maximum contact pressure against a coil housing by relaxing stress that acts on the coil housing during an operation of a cam mechanism.

An aspect of the invention relates to an electromagnetic clutch that includes: a rotary member; an output mechanism that is arranged along a rotation axis of the rotary member, and that includes an electromagnetic coil that generates electromagnetic force and an armature that is moved toward the electromagnetic coil by the electromagnetic force; a cam mechanism that is arranged next to the output mechanism along the rotation axis, and that is operated by rotation of the rotary member in an energized state of the electromagnetic coil; and a coil housing that is arranged along an axis of the cam mechanism, and that has an annular accommodating recess that is open toward the armature and that accommodates the electromagnetic coil. An open end face of the accommodating recess of the coil housing is a frictional engagement face of the coil housing. The armature has a frictional engagement face of the armature. The frictional engagement face of the coil housing is frictionally-engageable with the frictional engagement face of the armature. At least one of the coil housing and the armature has a contact pressure reducing portion that reduces a contact pressure of the frictional engagement face of the coil housing and a contact pressure of the frictional engagement face of the armature, which are generated based on cam thrust generated through an operation of the cam mechanism when the frictional engagement face of the coil housing and the frictional engagement face of the armature are frictionally-engaged with each other.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a plan view that schematically shows a vehicle in which an electromagnetic clutch according to a first embodiment of the invention is mounted;
FIG. 2A is a sectional view that shows an actuated state of the electromagnetic clutch according to the first embodiment of the invention;
FIG. 2B is a sectional view that shows a non-actuated state of the electromagnetic clutch according to the first embodiment of the invention;
FIG. 3 is a sectional view that shows a main portion of the electromagnetic clutch according to the first embodiment of the invention;
FIG. 4 is a sectional view that shows a state where an armature is frictionally engaged with a coil housing in the electromagnetic clutch according to the first embodiment of the invention;
FIG. 5A is a sectional view that shows an actuated state of an electromagnetic clutch according to a second embodiment of the invention;
FIG. 5B is a sectional view that shows a non-actuated state of the electromagnetic clutch according to the second embodiment of the invention;
FIG. 6 is a sectional view that shows a main portion of the electromagnetic clutch according to the second embodiment of the invention; and
FIG. 7 is a sectional view that shows a state where an armature is frictionally engaged with a coil housing in the electromagnetic clutch according to the second embodiment of the invention.

### DETAILED DESCRIPTION OF EMBODIMENTS

Hereinafter, an electromagnetic clutch according to a first embodiment of the invention will be described in detail with reference to the accompanying drawings.

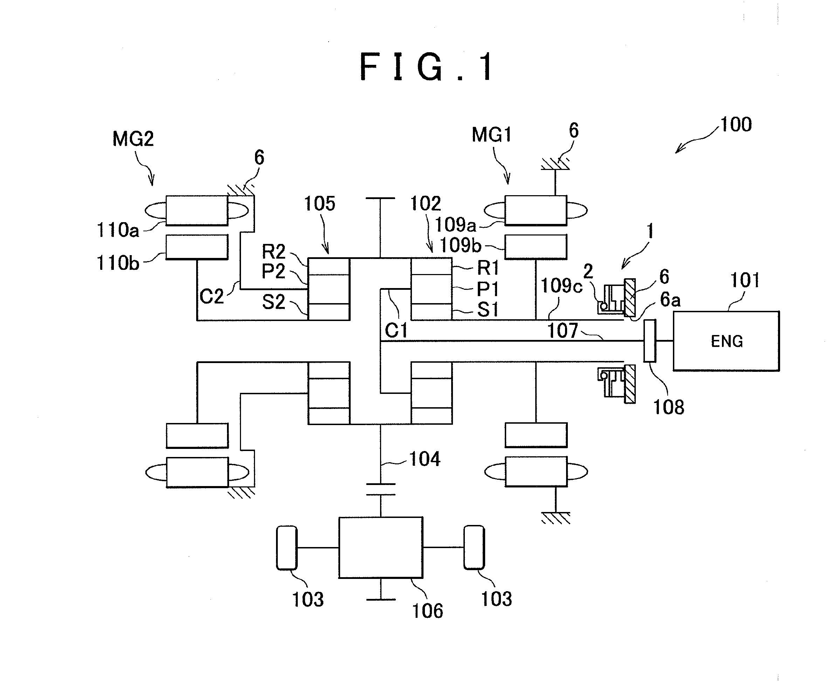

FIG. 1 shows a hybrid vehicle 100. As shown in FIG. 1, the hybrid vehicle 100 includes an engine 101, a first motor generator MG1, a power split mechanism 102, an output gear 104, and a second motor generator MG2. The engine 101 and the first motor generator MG1 are coupled to the power split mechanism 102. The output gear 104 outputs torque to drive wheels 103. The second motor generator MG2 is coupled to the output gear 104 via a speed reduction mechanism 105. Torque of the output gear 104 is transmitted to the right and left drive wheels 103 via a differential mechanism 106.

The engine 101 is configured as a spark-ignition multi-cylinder internal combustion engine. Torque of the engine 101 is transmitted to the power split mechanism 102 via an input shaft 107. A damper 108 is interposed between the input shaft 107 and the engine 101, and fluctuations in the torque of the engine 101 are absorbed by the damper 108.

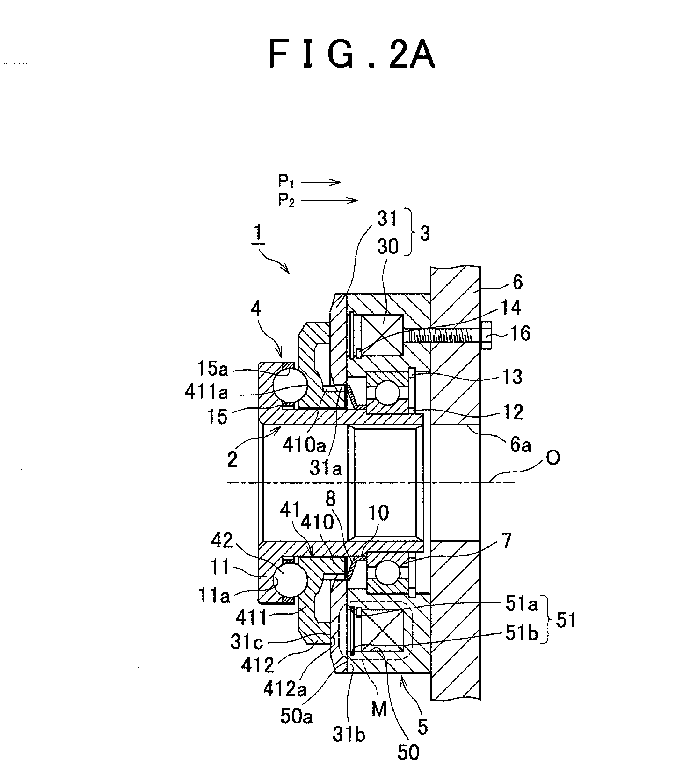

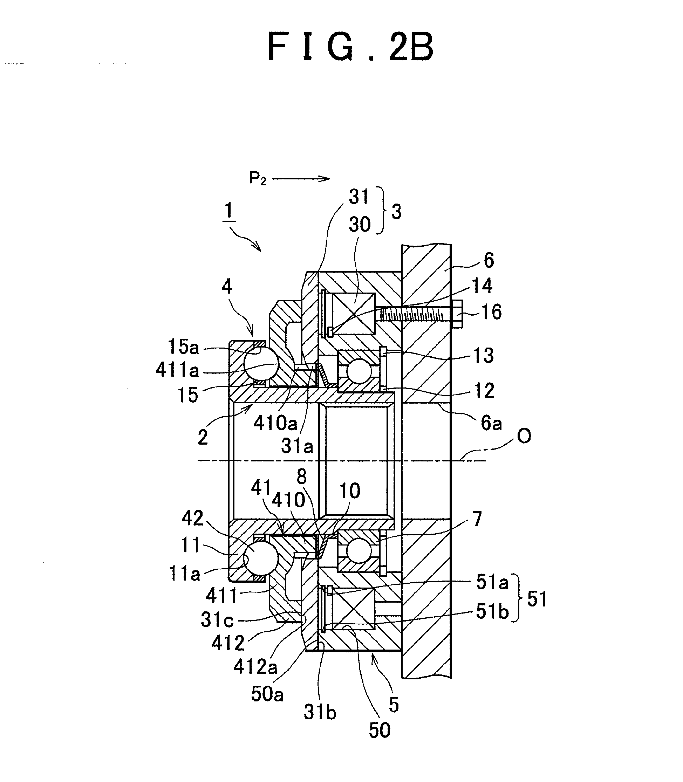

The first motor generator MG1 includes a stator 109a and a rotor 109b. The stator 109a is fixed to a casing 6 that serves as a fixed member. The rotor 109b is arranged radially inward of the stator 109a so as to be coaxial with the stator 109a. Similarly, the second motor generator MG2 includes a stator 110a and a rotor 110b. The stator 110a is fixed to the casing 6. The rotor 110b is arranged radially inward of the stator 110a so as to be coaxial with the stator 110a. The casing 6 has a through-hole 6a of which the axis coincides with a rotation axis O (shown in FIG. 2).

The power split mechanism 102 is formed of a single-pinion planetary gear mechanism that includes three elements that are differentially rotatable with respect to each other. The power split mechanism 102 includes a sun gear S1, a ring gear R1 and a carrier C1. The sun gear S1 is an external gear. The ring gear R1 is an internal gear arranged coaxially with the sun gear S1. The carrier C1 holds pinion gears P1 such that the pinion gears P1 are able to rotate about their axes and turn around the sun gear S1. The pinion gears P1 are in mesh with the sun gear S1 and the ring gear R1.

In the present embodiment, the input shaft 107 is coupled to the carrier C1, the first motor generator MG1 is coupled to the sun gear S1 via a rotary member 2, and the output gear 104 is coupled to the ring gear R1.

The rotary member 2 is coupled to the rotor 109b of the first motor generator MG1. The entirety of the rotary member 2 is formed of a hollow member, through which the input shaft 107 is passed. The details of the rotary member 2 will be described later.

The speed reduction mechanism 105 has three elements that are differentially rotatable with respect to each other. The speed reduction mechanism 105 is formed of a single-pinion planetary gear mechanism that reduces the speed of rotation of the second motor generator MG2 and that transmits the rotation with a reduced speed to the output gear 104. The speed reduction mechanism 105 includes a sun gear S2, a ring gear R2 and a carrier C2. The sun gear S2 is an external gear. The ring gear R2 is an internal gear. The ring gear R2 is arranged coaxially with the sun gear S2. The carrier C2 holds pinion gears P2 such that the pinion gears P2 are able to rotate about their axes and turn around the sun gear S1. The pinion gears P2 are in mesh with the sun gear S2 and the ring gear R2.

In the present embodiment, the sun gear S2 is coupled to the rotor 110b of the second motor generator MG2, and the ring gear R2 is coupled to the output gear 104. The carrier C2 is fixed to the casing 6. Thus, the speed of rotation of the second motor generator MG2 is reduced, and the torque is amplified and then transmitted to the output gear 104.

An electromagnetic clutch 1 is mounted in the hybrid vehicle 100. The electromagnetic clutch 1 functions as a brake device that applies a brake to the rotary member 2 with respect to the casing 6. In this way, it is possible to selectively carry out a continuously variable shift mode and a stepped shift mode. In the continuously variable shift mode, a continuously variable shifting is executed electrically with the use of the first motor generator MG1. In the stepped shift mode, stepped shifting is executed without using the first motor generator MG1.

FIG. 2A and FIG. 2B respectively show an actuated state and non-actuated state of the electromagnetic clutch. As shown in FIG. 2A and FIG. 2B, the electromagnetic clutch 1 is mainly formed of the rotary member 2, an output mechanism 3, a cam mechanism 4, and a coil housing 5. The rotary member 2 rotates together with the rotor 109b of the first motor generator MG1 (both are shown in FIG. 1). The output mechanism 3 is arranged along the rotation axis O of the rotary member 2. The cam mechanism 4 is actuated by actuating force output from the output mechanism 3, and converts rotational force from the rotary member 2 to cam thrust in a direction along the rotation axis O. The coil housing 5 is arranged along an axis (rotation axis O) of the cam mechanism 4.

The rotary member 2 is formed of a cylindrical hollow shaft. The rotary member 2 is coupled to the rotor 109b of the first motor generator MG1 via a hollow shaft 109c (shown in FIG. 1). In addition, the rotary member 2 is rotatably supported by the coil housing 5 via a bearing 7. The rotary member 2 is configured to rotate together with the rotor 109b through driving of the first motor generator MG1.

An annular support member 10 is arranged on the rotary member 2. The support member 10 supports the bearing 7 and a return spring 8 at its respective end faces, at positions on the outer periphery of the rotary member 2. In addition, a flange 11 is integrally formed with the rotary member 2. The flange 11 protrudes radially outward and faces the coil housing 5 via the cam mechanism 4.

The bearing 7 is formed of a ball bearing, and is arranged between the outer periphery of the rotary member 2 and the inner periphery of the coil housing 5. An inner ring of the bearing 7 is fixed to the rotary member 2 by a snap ring 12, and an outer ring of the bearing 7 is fixed to the coil housing 5 by a snap ring 13.

The return spring 8 is, for example, formed of a coned disc spring. The return spring 8 is interposed between the support member 10 and an armature 31 (described later), and is arranged on the outer periphery of the rotary member 2. The return spring 8 is configured to apply return force to the armature 31 in such a direction that the armature 31 moves away from an electromagnetic coil 30.

The flange 11 has cam grooves 11a that open toward the coil housing 5, and is formed of an annular member as a whole. The flange 11 is configured to function as a fixed cam member in the cam mechanism 4. Each cam groove 11a is formed of a recess of which the axial depth changes along the circumferential direction of the flange 11.

The output mechanism 3 includes the electromagnetic coil 30 and the armature 31, and is arranged around the rotary member 2.

The electromagnetic coil 30 is arranged in the output mechanism 3 at a position close to the casing 6. In addition, the electromagnetic coil 30 is accommodated in a coil accommodating portion 50 (described later) of the coil housing 5. The electromagnetic coil 30 is configured to form a magnetic circuit M over the armature 31 and the coil housing 5 upon energization, and to generate electromagnetic force that is used as a pushing force P₁ with which the armature 31 is pushed against the coil housing 5. The electromagnetic coil 30 is positioned with respect to the coil housing 5 by a snap ring 14.

The armature 31 has a straight spline fitting portion 31a on its inner peripheral portion. The armature 31 is arranged in the output mechanism 3 at a position close to the cam mechanism 4. In addition, the armature 31 is coupled to a cam member 41 of the cam mechanism 4 through spline-fitting so as to be non-rotatable but movable relative to the cam member 41. The entirety of the armature 31 is formed of an elastically deformable annular plate made of a magnetic material, such as iron. The armature 31 is configured to receive the electromagnetic force of the electromagnetic coil 30, as an output from the output mechanism 3, and move along the rotation axis O toward the coil housing 5. In addition, the armature 31 is configured to be able to rotate around the rotation axis O upon receiving the rotational force of the rotary member 2.

A first frictional engagement face 31b is formed on a coil housing-side end face of the armature 31. The first frictional engagement face 31b faces an open end face of the coil accommodating portion 50 of the coil housing 5. A second frictional engagement face 31c is formed on a cam mechanism-side (cam member-side) end face of the armature 31. The second frictional engagement face 31c faces a frictional engagement face 412a of the cam member 41.

The cam mechanism 4 includes the flange 11, the movable cam member 41 and cam followers 42. The flange 11 is non-rotatable with respect to the rotary member 2. The cam member 41 faces the flange 11. The cam followers 42 are interposed between the cam member 41 and the flange 11. The cam mechanism 4 is arranged along the rotation axis O. The cam mechanism 4 is configured to operate through the rotation of the rotary member 2 in the energized state of the electromagnetic coil 30.

The cam member 41 includes a base portion 410, a cam portion 411 and a pushing portion 412. The cam member 41 is arranged around the rotary member 2 so as to be rotatable around and movable along the rotation axis O. The cam member 41 moves toward the coil housing 5 through cam action generated through the operation of the cam mechanism 4. Thus, the frictional engagement face 412a of the pushing portion 412 is frictionally engaged with the second frictional engagement face 31c of the armature 31 with a pushing force P₂.

The base portion 410 has a straight spline fitting portion 410a on its outer periphery. The base portion 410 is arranged at the radially inner side portion of the cam member 41. The entirety of the base portion 410 is formed of a cylindrical member through which the rotary member 2 is passed.

The cam portion 411 has cam grooves 411a that open toward the flange 11. The cam portion 411 is located between the base portion 410 and the pushing portion 412. The entirety of the cam portion 411 is formed of an annular member through which the rotary member 2 is passed. Each cam groove 411a is formed of a recess of which the axial depth changes along the circumferential direction of the cam member 41.

The pushing portion 412 has the frictional engagement face 412a that faces the second frictional engagement face 31c of the armature 31. The pushing portion 412 is arranged at the radially outer side portion of the cam member 41. The entirety of the pushing portion 412 is formed of an annular member. The annular member has an inner periphery that faces the outer periphery of the base portion 410.

The cam followers 42 each are formed of a spherical member. The cam followers 42 are rollably arranged between the cam grooves 11a (groove bottoms) of the flange 11 and the cam grooves 411a (groove bottoms) of the cam portion 411. In addition, the cam followers 42 are retained by a retainer 15. Ball retaining holes 15a are formed in the retainer 15. The cam followers 42 are rollably retained in the ball retaining holes 15a.

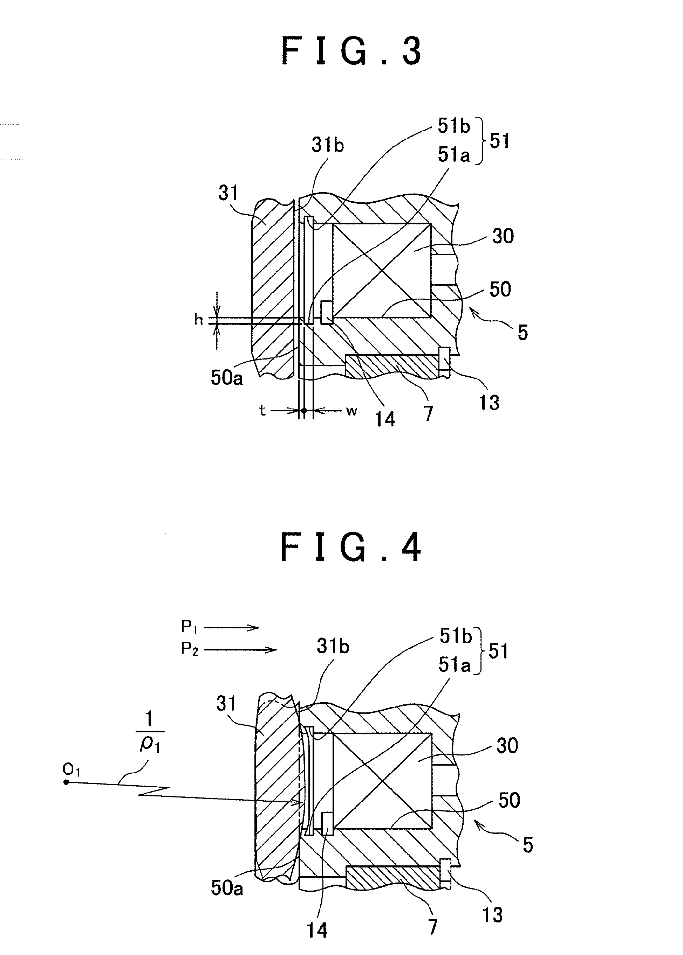

FIG. 3 shows the armature 31 and the coil housing 5. The coil housing 5 has the coil accommodating portion 50 and a contact pressure reducing portion 51. The coil housing 5 is arranged along the rotation axis O. In addition, the coil housing 5 is fixed to the casing 6 with fastening bolts 16. The entirety of the coil housing 5 is formed of a magnetic material. The coil housing 5 functions as a yoke, and is configured to form the magnetic circuit M together with the armature 31 upon energization of the electromagnetic coil 30.

The coil accommodating portion 50 has a frictional engagement face 50a at its open end face. The frictional engagement face 50a faces the first frictional engagement face 31b of the armature 31. The entirety of the coil accommodating portion 50 is formed of an annular recess that serves as an accommodating recess that is open toward the armature 31, as a whole.

As shown in FIG. 3, the contact pressure reducing portion 51 is formed of an annular first recess 51a and an annular second recess 51b. The first recess 51a is open at a radially inner-side inner periphery of the coil accommodating portion 50, at a position close to an open end of the coil accommodating portion 50. The second recess 51b faces the first recess 51a, and is open at a radially outer-side inner periphery of the coil accommodating portion 50, at a position close to the open end of the coil accommodating portion 50. The contact pressure reducing portion 51 is formed in the coil housing 5. The contact pressure reducing portion 51 is configured such that the frictional engagement face 50a receives pushing force (the pushing force P₁ based on electromagnetic force and the pushing force P₂ based on cam thrust) based on cam thrust generated through the operation of the cam mechanism 4 (shown in FIG. 2) from the first frictional engagement face 31b of the armature 31 and thus the coil housing 5 is elastically deformed. In this way, during the operation of the cam mechanism 4, the pushing force (P₁+P₂) based on the cam thrust acts on the open end face (frictional engagement face 50a) of the coil accommodating portion 50 of the coil housing 5 via the armature 31. Thus, the coil housing 5 elastically deforms, stress that acts on the coil housing 5 from the armature 31 is dispersed and relaxed. As a result, a maximum contact pressure of the first frictional engagement face 31b against the frictional engagement face 50a is reduced.

The first recess 51a and the second recess 51b are arranged at positions that are at a predetermined distance t (for example, t = 1 mm) from the open end face of the coil accommodating portion 50. In addition, the dimensions of the first recess 51a and the second recess 51b are set such that the width w is, for example, 1 mm and the depth h is, for example, 1.3 mm.

Next, the operation of the electromagnetic clutch according to the present embodiment will be described with reference to FIG. 2A, FIG. 2B and FIG. 4. FIG. 4 shows a state where the armature is frictionally engaged with the coil housing. Note that, in FIG. 4, deformation amounts of portions are exaggerated for illustrative purposes.

As shown in FIG. 2B, when the first motor generator MG1 (shown in FIG. 1) is driven, the rotational driving force of the first motor generator MG1 is transmitted to the rotary member 2, and the rotary member 2 is rotated.

Normally, at the time of starting the first motor generator MG1, the electromagnetic coil 30 of the output mechanism 3 is in the non-energized state. Therefore, the magnetic circuit M starting from the electromagnetic coil 30 is not formed. As a result, the armature 31 is not attracted to the coil housing 5.

Therefore, the pushing force P₁ that is used as clutch force is not generated in the output mechanism 3, and the first frictional engagement face 31b of the armature 31 is not frictionally engaged with the frictional engagement face 50a of the coil housing 5. As a result, braking force by the electromagnetic clutch 1 is not transmitted to the rotary member 2.

In this case, relative rotation between the flange 11 and the cam member 41 is restricted, and the cam mechanism 4 does not operate.

On the other hand, as shown in FIG. 2A, when the electromagnetic coil 30 is energized while the first motor generator MG1 is driven (while the rotary member 2 is rotated), the magnetic circuit M starting from the electromagnetic coil 30 is formed, and the armature 31 moves from its initial position toward the coil housing 5.

Therefore, the first frictional engagement face 31b of the armature 31 is frictionally engaged with the frictional engagement face 50a of the coil housing 5 with the pushing force P₁, and, accordingly, the cam mechanism 4 operates.

When the cam mechanism 4 operates, the frictional engagement face 412a of the pushing portion 412 of the cam member 41 is frictionally engaged with the second frictional engagement face 31c of the armature 31 with the pushing force P₂ (P₁ < P₂) that serves as cam thrust due to cam action generated through the operation of the cam mechanism 4. In addition, the first frictional engagement face 31b of the armature 31 is frictionally engaged with the frictional engagement face 50a of the coil housing 5 with the pushing force (P₁+P₂) more firmly than before the cam mechanism 4 is actuated. As a result, braking force by the electromagnetic clutch 1 is transmitted to the rotary member 2.

In this case, when the pushing force (P₁+P₂) based on cam thrust generated through the operation of the cam mechanism 4 acts on the open end face (frictional engagement face 50a) of the coil accommodating portion 50 in the coil housing 5 via the armature 31, the radially outer portion of the armature 31 is bent into the coil accommodating portion 50 at a curvature ρ₁ and is elastically deformed from the state indicated by a long dashed double-short dashed line in FIG. 4 into the state indicated by a continuous line in FIG. 4. Then, the coil housing 5 elastically deforms such that an open peripheral edge of the coil accommodating portion 50 is crushed to close the first recess 51a and the second recess 51b, and, while keeping these states, the first frictional engagement face 31b of the armature 31 is frictionally engaged with the frictional engagement face 50a of the coil housing 5. In FIG. 4, the reference sign O₁ denotes the center of a circle of curvature having a radius of 1/ρ₁.

Therefore, in the present embodiment, during the operation of the cam mechanism 4, it is possible to bring the armature 31 and the coil housing 5 into plane contact with each other with the coil housing 5 elastically deformed. In this way, it is possible to relax stress that acts from the armature 31 on the coil housing 5.

With the above-described first embodiment, the following advantageous effects are obtained.

During the operation of the cam mechanism 4, stress that acts on the coil housing 5 is relaxed. Thus, it possible to reduce the maximum contact pressure against the coil housing 5.

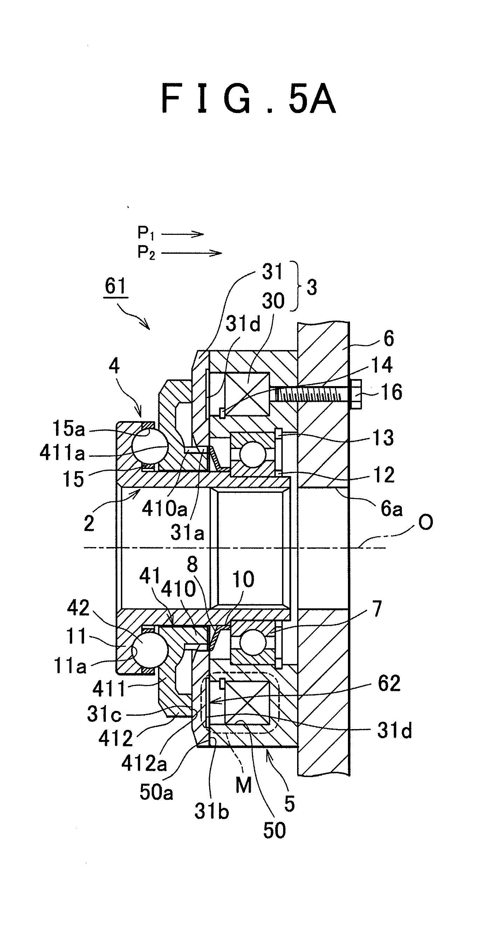

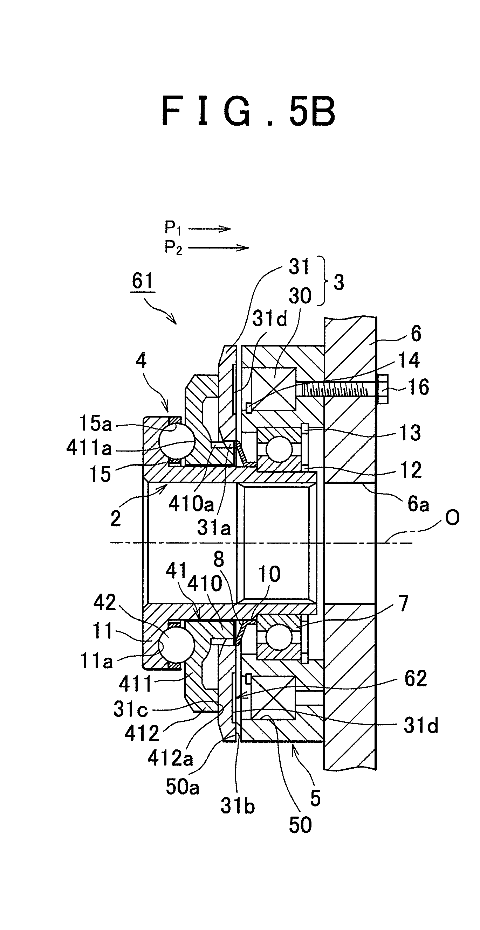

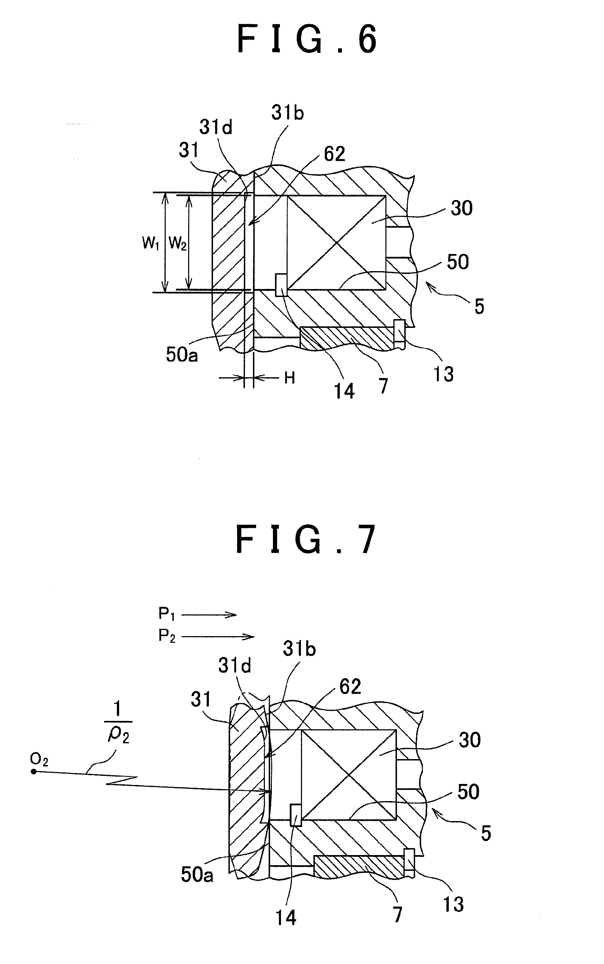

Next, an electromagnetic clutch 61 according to a second embodiment of the invention will be described with reference to FIG. 5A, FIG. 5B, FIG. 6 and FIG. 7. FIG. 5A and FIG. 5B respectively show an actuated state and non-actuated state of the electromagnetic clutch 61. FIG. 6 shows the armature and the coil housing. FIG. 7 shows a state where the armature is frictionally engaged with the coil housing. In FIG. 5A, FIG. 5B, FIG. 6 and FIG. 7, the same reference numerals denote the same members as those in FIG. 2A to FIG. 4, and the detailed description thereof is omitted. Note that, in FIG. 7, deformation amounts of portions are exaggerated for illustrative purposes.

As shown in FIG. 5A and FIG. 5B, the electromagnetic clutch 61 according to the second embodiment of the invention has a distinctive feature that the armature 31 of the output mechanism 3 has a contact pressure reducing portion 62.

Therefore, the contact pressure reducing portion 62 is formed by forming an annular recess 31d, which is open toward the coil housing 5, in the armature 31.

As shown in FIG. 6, the open width W₁ of the recess 31d is set larger than the open width W₂ of the coil accommodating portion 50 (W₂ < W₁). In this way, in the state where the armature 31 (first frictional engagement face 31b) is frictionally engaged with the coil housing 5 (frictional engagement face 50a), the armature 31 is arranged such that the bottom face of the recess 31d covers the entire open face of the coil accommodating portion 50. In addition, the depth H of the recess 31d is set to, for example, 2 mm.

The contact pressure reducing portion 62 is configured such that the first frictional engagement face 31b of the armature 31 receives reaction force of the pushing force (the pushing force P₁ based on electromagnetic force and the pushing force P₂ based on cam thrust) based on cam thrust generated through the operation of the cam mechanism 4 from the frictional engagement face 50a of the coil housing 5 and then the armature 31 is elastically deformed. Thus, during the operation of the cam mechanism 4, when the reaction force of the pushing force (P₁+P₂) based on the cam thrust is applied from the coil housing 5 onto the open end face (first frictional engagement face 31b) of the recess 31d, the armature 31 elastically deforms. As a result, stress that acts on the coil housing 5 from the armature 31 is dispersed and relaxed. In this way, a maximum contact pressure of the first frictional engagement face 31b against the frictional engagement face 50a is reduced.

As shown in FIG. 5B, in the thus configured electromagnetic clutch 61, when the first motor generator MG1 (shown in FIG. 1) is driven, the rotational driving force of the first motor generator MG1 is transmitted to the rotary member 2, and the rotary member 2 is rotated.

Normally, at the time of starting the first motor generator MG1, the electromagnetic coil 30 of the output mechanism 3 is in the non-energized state. Thus, the magnetic circuit M starting from the electromagnetic coil 30 is not formed, and the armature 31 is not attracted to the coil housing 5.

Therefore, the pushing force P₁ that is used as clutch force is not generated in the output mechanism 3, and the first frictional engagement face 31b of the armature 31 is not frictionally engaged with the frictional engagement face 50a of the coil housing 5. Therefore, braking force by the electromagnetic clutch 1 is not transmitted to the rotary member 2.

In this case, relative rotation between the flange 11 and the cam member 41 is restricted, and the cam mechanism 4 does not operate.

On the other hand, as shown in FIG. 5A, when the electromagnetic coil 30 is energized while the first motor generator MG1 is driven (while the rotary member 2 is rotated), the magnetic circuit M starting from the electromagnetic coil 30 is formed, and the armature 31 moves from its initial position toward the coil housing 5.

Therefore, the first frictional engagement face 31b of the armature 31 is frictionally engaged with the frictional engagement face 50a of the coil housing 5 with the pushing force P₁, and, accordingly, the cam mechanism 4 operates.

When the cam mechanism 4 operates, the frictional engagement face 412a of the pushing portion 412 of the cam member 41 is frictionally engaged with the second frictional engagement face 31c of the armature 31 with the pushing force P₂ (P₁ < P₂) as cam thrust, due to cam action generated through the operation of the cam mechanism 4. In addition, the first frictional engagement face 31b of the armature 31 is frictionally engaged with the frictional engagement face 50a of the coil housing 5 with the pushing force (P₁+P₂) motor firmly than before the cam mechanism 4 is actuated. As a result, braking force by the electromagnetic clutch 1 is transmitted to the rotary member 2.

In this case, the reaction force of the pushing force (P₁+P₂) based on the cam thrust generated through the operation of the cam mechanism 4 is applied from the coil housing 5 onto the open end face (first frictional engagement face 31b) of the recess 31d of the armature 31. Then, the radially outer portion of the armature 31 is bent into the coil accommodating portion 50 at a curvature ρ₂ that is larger than the curvature ρ₁ (ρ₂ > ρ₁) from the state indicated by long dashed double-short dashed line in FIG. 7. Then, the contact portion, which contacts the coil housing 5, is displaced so as to be move away from the edge of the coil accommodating portion 50 and is elastically deformed into the state indicated by continuous line in FIG. 7, and, while keeping this state, the first frictional engagement face 31b of the armature 31 is frictionally engaged with the frictional engagement face 50a of the coil housing 5. In FIG. 7, the reference sign O₂ denotes the center of a circle of curvature having a radius of 1/ρ₂.

Therefore, in the present embodiment, during the operation of the cam mechanism 4, it is possible to bring the armature 31 and the coil housing 5 into frictional engagement, with the armature 31 elastically deformed. Therefore, it is possible to relax stress that is applied from the armature 31 onto the coil housing 5.

According to the above-described second embodiment, similar advantageous effects to those of the first embodiment are obtained.

The electromagnetic clutch according to the invention has been described on the basis of the above embodiment. However, the invention is not limited to the above embodiment. The invention may be implemented in various other embodiments without departing from the scope of the invention, and may be, for example, modified as follows.

In the above-described embodiment, the description has been made on the case where the electromagnetic clutch functions as the brake device that applies a brake to the rotary member 2. However, the invention is not limited to this configuration. The electromagnetic clutch may be configured to function as a driving force transmission device that transmits driving torque between a pair of rotary members.

In the above-described first embodiment, the first recess 51a and the second recess 51b are formed in the coil accommodating portion 50 of the coil housing 5. In the above-described second embodiment, the annular recess 31d that opens toward the coil housing 5 is formed in the armature 31. However, the invention is not limited to the above-described embodiments. There may be employed a configuration in which the first recess 51a and the second recess 51b are formed in the coil accommodating portion 50 of the coil housing 5 and the annular recess 31d that opens toward the coil housing 5 is formed in the armature 31.

According to the invention, it is possible to reduce a maximum contact pressure against a coil housing by relaxing stress that acts on the coil housing during the operation of a cam mechanism.
An electromagnetic clutch includes: a rotary member; an output mechanism including an electromagnetic coil and an armature moved toward the electromagnetic coil by electromagnetic force; a cam mechanism operated by rotation of the rotary member in the electromagnetic coil energized state; and a coil housing having a coil accommodating portion open toward the armature and accommodating the electromagnetic coil. The coil housing and the armature have frictional engagement faces. The frictional engagement faces of the coil housing and the armature are frictionally-engageable. At least one of the coil housing and the armature has a contact pressure reducing portion for reducing contact pressures of the frictional engagement faces of the coil housing and the armature, generated based on cam thrust generated through an operation of the cam mechanism when the frictional engagement faces of the coil housing and the armature are frictionally-engaged.

## Claims

1. An electromagnetic clutch, comprising:
a rotary member;
an output mechanism that is arranged along a rotation axis of the rotary member, and that includes an electromagnetic coil that generates electromagnetic force and an armature that is moved toward the electromagnetic coil by the electromagnetic force;
a cam mechanism that is arranged next to the output mechanism along the rotation axis, and that is operated by rotation of the rotary member in an energized state of the electromagnetic coil; and
a coil housing that is arranged along an axis of the cam mechanism, and that has an annular accommodating recess that is open toward the armature and that accommodates the electromagnetic coil, wherein
an open end face of the accommodating recess of the coil housing is a frictional engagement face of the coil housing,
the armature has a frictional engagement face of the armature,
the frictional engagement face of the coil housing is frictionally-engageable with the frictional engagement face of the armature, and
at least one of the coil housing and the armature has a contact pressure reducing portion that reduces a contact pressure of the frictional engagement face of the coil housing and a contact pressure of the frictional engagement face of the armature, which are generated based on cam thrust generated through an operation of the cam mechanism when the frictional engagement face of the coil housing and the frictional engagement face of the armature are frictionally-engaged with each other.

2. The electromagnetic clutch according to claim 1, wherein
the coil housing has, as the contact pressure reducing portion, an annular first recess that is open at a radially inner-side inner periphery of the accommodating recess, at a position close to an open end of the accommodating recess, and an annular second recess that radially faces the first recess and that is open at a radially outer-side inner periphery of the accommodating recess, at a position close to the open end of the accommodating recess.

3. The electromagnetic clutch according to claim 1 or 2, wherein
the armature has, as the contact pressure reducing portion, an annular recess that is open toward the coil housing.

4. The electromagnetic clutch according to claim 3, wherein
an open width of the recess of the armature, which is open toward the coil housing, is larger than an open width of the accommodating recess.
